(19) Europäisches Patentamt
European Patent Office
Office européen des brevets

(11) **EP 4 464 899 A1**

(12) **EUROPEAN PATENT APPLICATION**
published in accordance with Art. 153(4) EPC

(43) Date of publication:
**20.11.2024 Bulletin 2024/47**

(21) Application number: **23740271.4**

(22) Date of filing: **11.01.2023**

(51) International Patent Classification (IPC):
*F04D 19/04* (2006.01)     *B22F 7/08* (2006.01)
*B22F 10/14* (2021.01)     *B22F 10/18* (2021.01)
*B22F 10/25* (2021.01)     *B22F 10/28* (2021.01)
*B33Y 10/00* (2015.01)     *B33Y 80/00* (2015.01)

(52) Cooperative Patent Classification (CPC):
**B22F 7/08; B22F 10/14; B22F 10/18; B22F 10/25; B22F 10/28; B33Y 10/00; B33Y 80/00; F04D 19/04; Y02P 10/25**

(86) International application number:
**PCT/JP2023/000442**

(87) International publication number:
**WO 2023/136262 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2022 JP 2022003614**

(71) Applicant: **Edwards Japan Limited**
**Yachiyo-shi, Chiba 276-8523 (JP)**

(72) Inventor: **KABASAWA, Takashi**
**Yachiyo-shi, Chiba 276-8523 (JP)**

(74) Representative: **Openshaw & Co.**
**8 Castle Street**
**Farnham, Surrey GU9 7HR (GB)**

(54) **VACUUM PUMP, ROTATING BODY FOR VACUUM PUMP, AND METHOD FOR MANUFACTURING VACUUM PUMP**

(57)     A vacuum pump which can prevent wasting of materials and can be manufactured easily is provided.

Main-body casings and a rotating body installed rotatably in the main-body casings are provided, and the rotating body has a structure that a second component is caused to cover a periphery of a first component disposed on an inner side. The second component is formed by solidifying a powder. The first component is formed of at least any one of an extruded material, a cast material, and a forged material. The second component is formed of a green pellet.

FIG. 1

CONTROL APPARATUS

EP 4 464 899 A1

**Description**

TECHNICAL FIELD

The present invention relates to a vacuum pump such as a turbo-molecular pump and the like, for example, a rotating body for vacuum pump, and a manufacturing method of vacuum pump.

BACKGROUND ART

In general, a turbo-molecular pump is known as one type of a vacuum pump. In this turbo-molecular pump, a rotor blade is rotated by energizing a motor inside a pump main body, and a gas is exhausted by flipping gas molecules of a gas (process gas) sucked into the pump main body. Moreover, the turbo-molecular pump as above includes a type including a heater and a cooling pipe for properly controlling a temperature in the pump.

The rotor blade for a turbo-molecular pump is provided on a motor-driven rotating body so as to protrude to a radial direction. Since the rotating body is rotated at a high speed, a large centrifugal force acts during the rotation. Thus, there are limiting conditions as below, for example, for the rotating body:

(1) Machining with high accuracy is needed so as not to cause poor balance during rotation.
(2) High material strength is needed in order to withstand a centrifugal force generated during high-speed rotation.

In order to satisfy the aforementioned limiting conditions, the rotating body is entirely shaved out of a columnar material in many cases. However, in a method of entirely shaving the rotating body out of the columnar material, a most part of the material (80% or more, for example) is shaved out, which causes materials to be wasted.

CITATION LIST

PATENT LITERATURE

[PTL 1] Japanese Patent No. 6284519

SUMMARY OF INVENTION

TECHNICAL PROBLEM

Under such circumstances, PTL 1 discloses an art of making a cylindrical rotor shaft (rotor shaft (15)) and a disc-shaped rotor disc (rotor disc 66) separately and of combining them. PTL 1 discloses three methods of combining the rotor shaft and the rotor disc as follows. However, each has its problem, and application of each of the methods is not easy.

(1) Method 1: The both (the rotor shaft (15) and the rotor disc (66)) are interference-fit (paragraphs 0028 and 0081).

Problem of Method 1: A ring-shaped component such as the rotor disc (66) can be easily expanded by a centrifugal force generated during a high-speed rotation. A large interference (interference) is needed so that the rotor disc (66) will not be loosened. Thus, a load (a load by press-fit, a load by pressurization, a load by a stress) acting on the rotor disc (66) increases.

(2) Method 2: The both are joined by frictional welding, friction stir welding or the like (paragraph 0063).

Problem of Method 2: It is necessary to fix either one of the rotor shaft (15) and the rotor disc (66) and to rotate the other while a strong load is applied. However, since the rotor disc (66) does not have a spot (flat spot) which can be grasped by a chuck of a machine tool, machining of the rotor disc (66) is considered to be difficult.

(3) Method 3: The both are joined by welding or the like (paragraph 0063).

Problem of Method 3: It is difficult to weld or the like an entire opposed surface after assembling, and welding or the like is considered to be performed only in a vicinity of an end surface (only a shallow part of the surface). Thus, fixing strength can be insufficient easily.

An object of the present invention is to provide a vacuum pump, a rotating body for the vacuum pump, and a manufacturing method of the vacuum pump which can prevent wasting of a material and can be manufactured easily.

SOLUTION TO PROBLEM

(1) In order to achieve the aforementioned object, a vacuum pump according to the present invention is characterized in that,

in a vacuum pump including a vacuum vessel; and
a rotating body installed rotatably in the vacuum vessel,
the rotating body has a structure in which a second component formed by solidifying a powder is caused to cover a periphery of a first component disposed inside.

(2) In order to achieve the aforementioned object, a rotating body for a vacuum pump according to the present invention is characterized by having, in the rotating body for a vacuum pump installed rotatably in the vacuum vessel of the vacuum pump,
a structure in which a second component formed by solidifying a powder is caused to cover a periphery of a first component disposed inside.
(3) In order to achieve the aforementioned object, a manufacturing method of a vacuum pump according to the present invention is characterized in that, in a manufacturing method of a vacuum pump including a vacuum vessel and a rotating body installed rotatably in the vacuum vessel,
the rotating body includes:

a first process in which a second component formed by solidifying a powder is caused to cover a periphery of a first component disposed inside; and
a second process in which the first component and the second component are subjected to sintering processing together.

ADVANTAGEOUS EFFECTS OF INVENTION

According to the invention described above, a vacuum pump, a rotating body for a vacuum pump, and a manufacturing method of a vacuum pump which can prevent wasting of materials and can be manufactured easily.

BRIEF DESCRIPTION OF DRAWINGS

[FIG. 1] FIG. 1 is an explanatory diagram schematically illustrating a structure of a turbo-molecular pump according to an embodiment of the present invention;
[FIG. 2] FIG. 2 is a circuit diagrams of an amplification circuit;
[FIG. 3] FIG. 3 is a time chart illustrating control when a current instructed value is larger than a detected value;
[FIG. 4] FIG. 4 is a time chart illustrating control when the current instructed value is smaller than the detected value;
[FIG. 5] FIG. 5 is a vertical sectional view schematically illustrating a structure of a rotating body;
[FIG. 6] FIG. 6 is an explanatory diagram illustrating a state from before assembling of the rotating body to after sintering processing;
[FIG. 7] FIG. 7 is an explanatory diagram illustrating an example of a manufacturing work of the rotating body;
[FIG. 8] FIG. 8 is an explanatory diagram schematically illustrating a stereoscopic shaping device by a BJ method;
[FIG. 9] FIG. 9 is an explanatory diagram schematically illustrating a stereoscopic shaping device by an FDM method;
[FIG. 10] FIG. 10 is an explanatory diagram illustrating a structure of a turbo-molecular pump of a type including both a Siegbahn-type exhaust mechanism portion and a Holweck-type exhaust mechanism portion and a flow of a gas;
[FIG. 11] FIG. 11 is an explanatory diagram schematically illustrating the flow of the gas in a part surrounded by a two-dotted chain line frame L in FIG. 10;
[FIG. 12] FIG. 12 is an explanatory diagram schematically illustrating a plate surface on an upstream side in a fixed disc on a downstream side;
[FIG. 13] FIG. 13 is a vertical sectional view schematically illustrating a rotating disc ring portion;
[FIG. 14] FIG. 14 is an explanatory diagram schematically illustrating a stereoscopic shaping device by a PBF method; and
[FIG. 15] FIG. 15 is an explanatory diagram schematically illustrating a stereoscopic shaping device by a DED method.

DESCRIPTION OF EMBODIMENTS

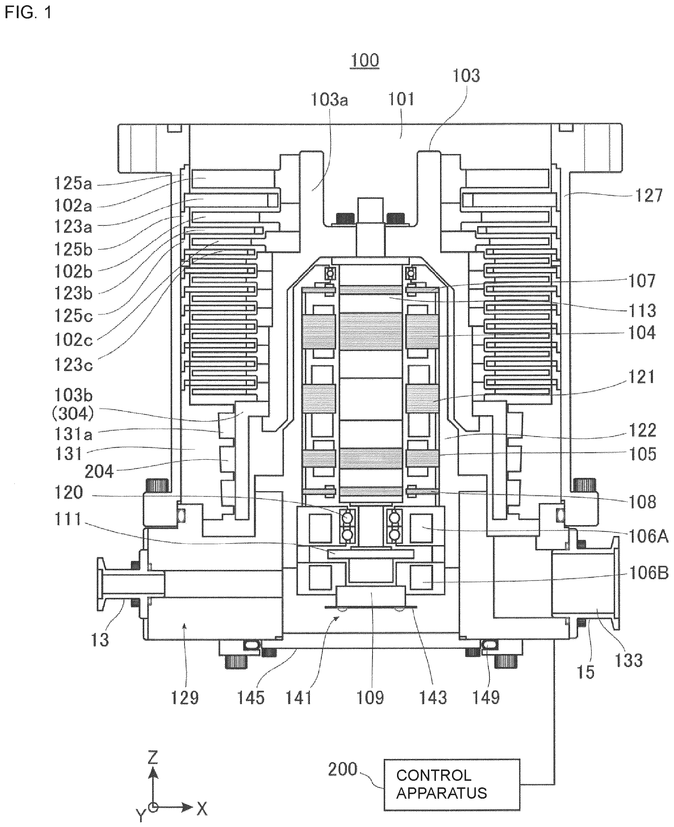

Hereinafter, a vacuum pump according to an embodiment of the present invention will be described on the basis of figures. FIG. 1 illustrates a turbo-molecular pump 100 as a vacuum pump according to the embodiment of the present invention. This turbo-molecular pump 100 is configured to be connected to a vacuum chamber (not shown) of a target device such as a semiconductor manufacturing device and the like.

Basic Constitution of Turbo-Molecular Pump 100

A vertical sectional view of this turbo-molecular pump 100 is illustrated in FIG. 1. In FIG. 1, the turbo-molecular pump 100 has an inlet port 101 formed on an upper end of a cylindrical outer cylinder 127. And inside the outer cylinder 127, a rotating body 103 in which a plurality of rotor blades 102 (102a, 102b, 102c, ...), which are turbine blades for sucking/exhausting a gas, are formed on a peripheral part radially and in multiple stages is provided. At a center of this rotating body 103, a rotor shaft 113 is mounted, and this rotor shaft 113 is floated/supported in the air and position-controlled by a magnetic bearing of five-axes control, for example.

In an upper-side radial electromagnet 104, four electromagnets are disposed by forming a pair on an X-axis and a Yaxis. In a vicinity of this upper-side radial electromagnet 104, four upper-side radial sensors 107 are provided correspondingly to each of the upper-side radial electromagnets 104. As the upper-side radial sensor 107, an inductance sensor or an ebb-current sensor having conductive wiring is used, for example, and a position of the rotor shaft 113 is detected on the basis of a change in inductance of the conductive wiring changing in accordance with the position of the rotor shaft 113. This upper-side radial sensor 107 is configured to detect the rotor shaft 113, that is, a radial displacement of the rotating body 103 fixed thereto and to send it to a control device 200.

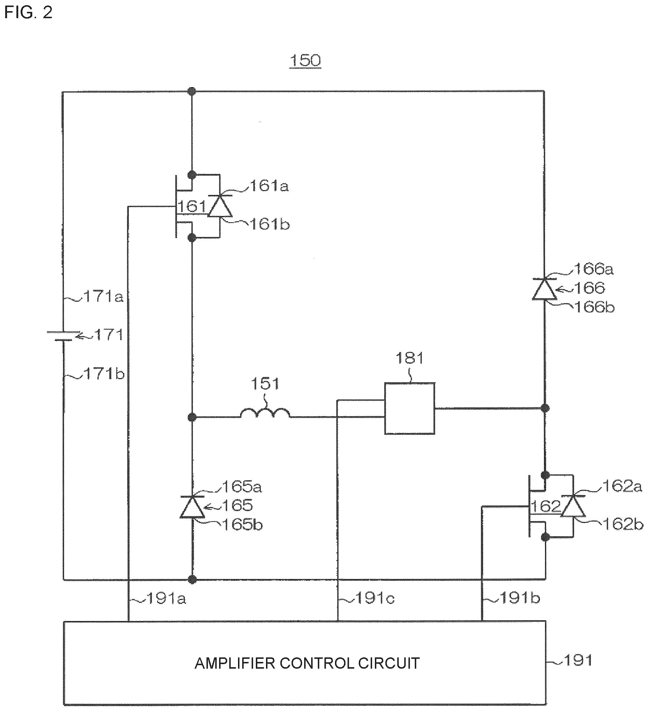

In this control device 200, a compensation circuit having a PID adjustment function, for example, generates an excitation control instruction signal of the upper-side radial electromagnet 104 on the basis of a position signal detected by the upper-side radial sensor 107, and an amplification circuit 150 (which will be described later) shown in FIG. 2 excites/controls the upper-side radial electromagnet 104 on the basis of this excitation control instruction signal so that a radial position on an upper side of the rotor shaft 113 is adjusted.

And this rotor shaft 113 is formed of a material with high magnetic permeability (iron, stainless or the like) or the like and is configured to be attracted by a magnetic force of the upper-side radial electromagnet 104. Such adjustment is made independently in an X-axis direction and in a Y-axis direction. Moreover, a lower-side radial electromagnet 105 and a lower-side radial sensor 108 are disposed similarly to the upper-side radial electromagnet 104 and the upper-side radial sensor 107, and a radial position on a lower side of the rotor shaft 113 is adjusted similarly to the radial position on the upper side.

Furthermore, axial electromagnets 106A and 106B are disposed by vertically sandwiching a disc-shaped metal disc 111 provided on a lower part of the rotor shaft 113. The metal disc 111 is constituted of a material with high magnetic permeability such as iron. An axial sensor 109 is provided in order to detect an axial displacement of the rotor shaft 113, and it is configured such that an axial position signal thereof is sent to the control device 200.

And in the control device 200, the compensation circuit having the PID adjustment function, for example, generates the excitation control instruction signal for each of the axial electromagnet 106A and the axial electromagnet 106B on the basis of an axial position signal detected by the axial sensor 109, and the amplification circuit 150 excites/controls the axial electromagnet 106A and the axial electromagnet 106B on the basis of the excitation control instruction signals, respectively, so that the axial electromagnet 106A attracts the metal disc 111 upward by the magnetic force, while the axial electromagnet 106B attracts the metal disc 111 downward, and the axial position of the rotor shaft 113 is adjusted.

As described above, the control device 200 appropriately adjusts the magnetic force by the axial electromagnets 106A and 106B applied to the metal disc 111, magnetically floats the rotor shaft 113 in the axial direction and holds it in a space in a non-contact manner. Note that the amplification circuit 150 which excites/controls the upper-side radial electromagnet 104, the lower-side radial electromagnet 105, and the axial electromagnets 106A and 106B will be described later.

On the other hand, a motor 121 includes a plurality of magnetic poles disposed in a circumferential state so as to surround the rotor shaft 113. Each of the magnetic poles is controlled by the control device 200 so that it rotates/drives the rotor shaft 113 through an electromagnetic force acting between it and the rotor shaft 113. Moreover, the motor 121 incorporates rotation speed sensors such as a Hall element, a resolver, an encoder and the like, not shown, for example, and it is configured such that a rotation speed of the rotor shaft 113 is detected by a detection signal of this rotation speed sensor.

Furthermore, in the vicinity of the lower-side radial sensor 108, for example, a phase sensor, not shown, is mounted so as to detect a phase of rotation of the rotor shaft 113. The control device 200 is configured to detect a position of the magnetic pole by using detection signals of both this phase sensor and the rotation speed sensor.

With a slight clearance (predetermined interval) from the rotor blades 102 (102a, 102b, 102c, ...), a plurality of stator blades 123 (123a, 123b, 123c, ...) are disposed. The rotor blade 102 (102a, 102b, 102c, ...) is formed with inclination by a predetermined angle from a plane perpendicular to an axis of the rotor shaft 113 so as to transfer molecules of an exhaust gas thereof by a collision to a lower direction, respectively.

Moreover, the stator blades 123 are also formed similarly with inclination by a predetermined angle from the plane perpendicular to the axis of the rotor shaft 113 and are disposed alternately with stages of the rotor blades 102 toward an inside of the outer cylinder 127. And outer peripheral ends of the stator blades 123 are supported in a state fitted and inserted between stator-blade spacers 125 (125a, 125b, 125c, ...) stacked in plural stages.

The stator-blade spacer 125 is a ring-shaped member and is constituted by metal such as aluminum, iron, stainless, copper or the like or an alloy containing these metals as components. On an outer periphery of the stator-blade spacer 125, the outer cylinder 127 is fixed with a slight clearance. On a bottom part of the outer cylinder 127, a base portion 129 is disposed. On the base portion 129, an outlet port 133 is formed and communicates with an outside. An exhaust gas entering from a chamber (vacuum chamber) side into the inlet port 101 and transferred to the base portion 129 is sent to the outlet port 133.

Moreover, depending on an application of the turbo-molecular pump 100, a threaded spacer 131 is disposed between a lower part of the stator-blade spacer 125 and the base portion 129. The threaded spacer 131 is a cylindrical member constituted by metal such as aluminum, copper, stainless, iron or an alloy containing these metals as components, and a plurality of spiral thread grooves 131a are engraved in an inner peripheral surface thereof. A spiral direction of the thread groove 131a is a direction in which, when the molecule of the exhaust gas is moved in a rotating direction of the rotating body 103, this molecule is transferred toward the outlet port 133. On a lower part of a rotating-body main body 103a of the rotating body 103 where the rotor blades 102 (102a, 102b, 102c, ...) are formed, a rotating-body lower cylinder portion 103b is suspended. An outer peripheral surface of this rotating-body lower cylinder portion 103b has a cylindrical shape and is extended toward the inner peripheral surface of the threaded spacer 131 and is close to the inner peripheral surface of this threaded spacer 131 with a predetermined clearance. The exhaust gas having been transferred by the rotor blade 102 and the stator blade 123 to the thread groove 131a is sent to the base portion 129 while being guided by the thread groove 131a. As described above, the threaded spacer 131 and the rotating-body lower cylinder portion 103b opposed thereto constitute a Holweck-type exhaust mechanism portion 204. The Holweck-type exhaust mechanism portion 204 gives directionality to the exhaust gas and improves exhaust characteristics of the turbo-molecular pump 100 by rotation of the rotating-body lower cylinder portion 103b with respect to the threaded spacer 131. The Holweck-type exhaust mechanism portion 204 will be described later.

The base portion 129 is a disc-shaped member constituting a bottom portion of the turbo-molecular pump 100 and is constituted by metal such as iron, aluminum, stainless or the like in general. The base portion 129 physically holds the turbo-molecular pump 100 and has a function of a conducting path of a heat at the same time and thus, metal with rigidity and high heat conductivity such as iron, aluminum, copper or the like is preferably used.

In such configuration, when the rotor blade 102 is rotated/driven together with the rotor shaft 113 by the motor 121, by means of actions of the rotor blade 102 and the stator blade 123, the exhaust gas is sucked from the chamber through the inlet port 101. The exhaust gas sucked through the inlet port 101 passes between the rotor blade 102 and the stator blade 123 and is transferred to the base portion 129. At this time, a temperature of the rotor blade 102 is raised by a friction heat generated when the exhaust gas contacts the rotor blade 102 or conduction or the like of a heat generated in the motor 121, and this heat is conducted to the stator blade 123 side by radiation or conduction by a gas molecule (gas molecule) or the like of the exhaust gas.

The stator-blade spacers 125 are joined to each other on outer peripheral portions and conduct a heat that the stator blade 123 received from the rotor blade 102, the friction heat generated when the exhaust gas contacts the stator blade 123 and the like to the outside.

Note that, it was explained that the threaded spacer 131 is disposed on the outer periphery of the rotating-body lower cylinder portion 103b of the rotating body 103, and the thread groove 131a is engraved in the inner peripheral surface of the threaded spacer 131 as above. However, to the contrary, the thread groove is engraved in an outer peripheral surface of the rotating-body lower cylinder portion 103b, and a spacer having a cylindrical inner peripheral surface on a periphery thereof is disposed in some cases.

Moreover, depending on the application of the turbo-molecular pump 100, a periphery of an electric component portion is covered with a stator column 122 so that the gas sucked through the inlet port 101 does not intrude into the electric component portion constituted by the upper-side radial electromagnet 104, the upper-side radial sensor 107, the motor 121, the lower-side radial electromagnet 105, the lower-side radial sensor 108, the axial electromagnets 106A and 106B, the axial sensor 109 and the like, and an inside of the stator column 122 is held at a predetermined pressure by a purge gas in some cases.

In this case, piping, not shown, is disposed in the base portion 129, and the purge gas is introduced through this piping. The introduced purge gas is sent out to the outlet port 133 through clearances between a protective bearing 120 and the rotor shaft 113, between a rotor and a stator of the motor 121, and between the stator column 122 and the inner-peripheral side cylinder portion of the rotor blade 102.

Here, the turbo-molecular pump 100 needs control based on specification of a model and individually adjusted specific parameters (characteristics corresponding to the model, for example). In order to store the control parameters, the turbo-molecular pump 100 includes an electronic circuit portion 141 in a main body thereof. The electronic circuit portion 141 is constituted by electronic components such as a semiconductor memory such as an EEP-ROM and the like and a semiconductor device and the like for access and substrate 143 for mounting them and the like. This electronic circuit portion 141 is accommodated in a lower part of a rotation speed sensor, not shown, closer to a center, for example, of the base portion 129 constituting the lower part of the turbo-molecular pump 100 and is closed by an air-tight bottom lid 145.

In a manufacturing process of a semiconductor, some process gases introduced into a chamber have a characteristic that it becomes solid when a pressure thereof becomes higher than a predetermined value or when a temperature thereof becomes lower than a predetermined value. Inside the turbo-molecular pump 100, the pressure of the exhaust gas is the lowest at the inlet port 101 and the highest at the outlet port 133. If the pressure of the process gas becomes higher than the predetermined value or the temperature thereof becomes lower than the predetermined value in the middle of transfer from the inlet port 101 to the outlet port 133, the process gas becomes a solid state and adheres to and is deposited on the inside of the turbo-molecular pump 100.

For example, if SiCl4 is used as a process gas in an Al etching device, it is known from a steam-pressure curve that a solid product (AlCl3, for example) is precipitated at a low vacuum (760 [torr] to 10-2 [torr]) and at a low temperature (approximately 20 [°C]) and adheres/deposits inside the turbo-molecular pump 100. As a result, if the precipitates of the process gas are deposited inside the turbo-molecular pump 100, the deposits narrow a pump channel and causes deterioration of performances of the turbo-molecular pump 100. And the aforementioned products were easily solidified and adhered at a part close to the outlet port or to the threaded spacer 131 where the pressure was high.

Thus, in order to solve this problem, conventionally, a heater, not shown, or an annular water-cooling pipe 149 is wound around an outer periphery of the base portion 129 or the like and a temperature sensor (a thermistor, for example), not shown, is embedded in the base portion 129, for example, and heating of the heater or cooling by the water-cooling pipe 149 is controlled (hereinafter, referred to as TMS. TMS: Temperature Management System) so that the temperature of the base portion 129 is kept at a certain high temperature (set temperature) on the basis of a signal of this temperature sensor.

Subsequently, regarding the turbo-molecular pump 100 constituted as above, the amplification circuit 150 which excites/controls the upper-side radial electromagnet 104, the lower-side radial electromagnet 105, and the axial electromagnets 106A and 106B will be described. A circuit diagram of this amplification circuit is shown in FIG. 2.

In FIG. 2, an electromagnet wiring 151 constituting the upper-side radial electromagnet 104 and the like has one end thereof connected to a positive electrode 171a of a power source 171 through a transistor 161 and has the other end connected to a negative electrode 171b of the power source 171 through a current detection circuit 181 and a transistor 162. And the transistors 161 and 162 are so-called power MOSFET and have a structure in which a diode is connected between a source and a drain thereof.

At this time, the transistor 161 has a cathode terminal 161a of the diode thereof connected to the positive electrode 171a and has an anode terminal 161b connected to one end of the electromagnet wiring 151. Moreover, the transistor 162 has a cathode terminal 162a of the diode thereof connected to the current detection circuit 181 and has an anode terminal 162b connected to the negative electrode 171b.

On the other hand, a diode 165 for current regeneration has a cathode terminal 165a thereof connected to one end of the electromagnet wiring 151 and has an anode terminal 165b thereof connected to the negative electrode 171b. Moreover, similarly to this, a diode 166 for current regeneration has a cathode terminal 166a thereof connected to the positive electrode 171a and an anode terminal 166b thereof connected to the other end of the electromagnet wiring 151 through the current detection circuit 181. And the current detection circuit 181 is constituted by a Hall-sensor type current sensor or an electric resistance element, for example.

The amplification circuit 150 constituted as above corresponds to one electromagnet. Thus, in a case where the magnetic bearing is five-axes control and has 10 pieces of the electromagnets 104, 105, 106A and 106B in total, the similar amplification circuit 150 is constituted for each of the electromagnets, and 10 units of the amplification circuits 150 are connected in parallel to the power source 171.

Moreover, an amplification control circuit 191 is constituted by a digital signal processor portion (hereinafter, referred to as a DSP portion), not shown, of the control device 200, for example, and this amplification control circuit 191 is configured to switch on/off the transistors 161 and 162.

The amplification control circuit 191 is configured to compare a current value (a signal reflecting this current value is referred to as a current detection signal 191c) detected by the current detection circuit 181 and a predetermined current instructed value. And on the basis of this comparison result, a size of a pulse width (pulse-width time Tp1, Tp2) to be generated in a control cycle Ts, which is one cycle by PWM control, is determined. As a result, gate drive signals 191a and 191b having this pulse width is configured to be output to gate terminals of the transistors 161 and 162 from the amplification control circuit 191.

Note that it is necessary to execute position control of the rotating body 103 at a high speed and with a strong force when passing a resonant point during an acceleration operation of a rotation speed of the rotating body 103, at occurrence of a disturbance during a constant-speed operation and the like. Thus, a high voltage such as approximately 50V, for example, is used in the power source 171 so that the current flowing through the electromagnet wiring 151 can be rapidly increased (or decreased). Moreover, a capacitor is usually connected between the positive electrode 171a and the negative electrode 171b of the power source 171 for stabilization of the power source 171 (not shown).

In the configuration as above, when both the transistors 161 and 162 are turned on, the current flowing through the electromagnet wiring 151 (hereinafter referred to as an electromagnet current iL) increases, while when the both are turned off, the electromagnet current iL decreases.

Moreover, when one of the transistors 161 and 162 is turned on, while the other is turned off, a so-called flywheel current is held. And by causing the flywheel current to flow through the amplification circuit 150 as above, a hysteresis loss in the amplification circuit 150 is decreased, and power consumption as the entire circuit can be kept low. Moreover, by controlling the transistors 161 and 162 as above, a high-frequency noise such as a harmonic generated in the turbo-molecular pump 100 can be reduced. Furthermore, by measuring this flywheel current by the current detection circuit 181, the electromagnet current iL flowing through the electromagnet wiring 151 can be detected.

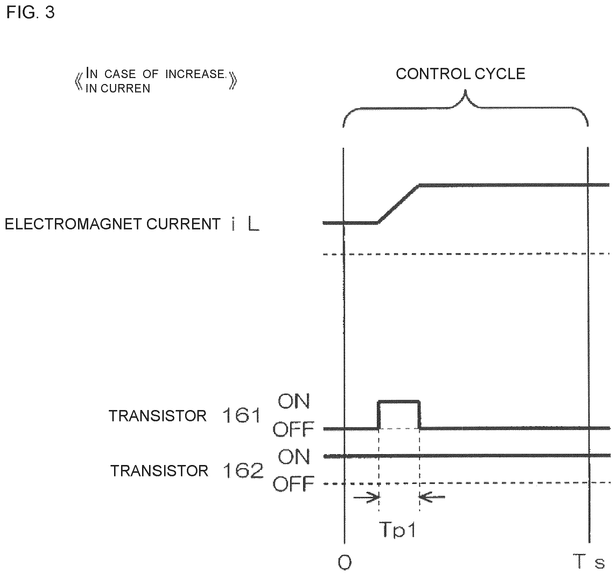

That is, if the detected current value is smaller than the current instructed value, the transistors 161 and 162 are both turned on only for a period of time corresponding to the pulse-width time Tp1 only once in a control cycle Ts (100 μs, for example) as shown in FIG. 3. Thus, the electromagnet current iL during this period increases toward a current value iLmax (not shown) that can be made to flow from the positive electrode 171a to the negative electrode 171b through the transistors 161 and 162.

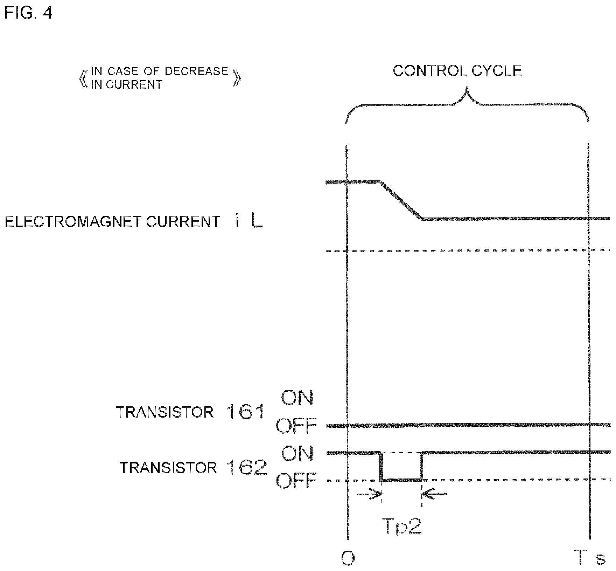

On the other hand, if the detected current value is larger than the current instructed value, the transistors 161 and 162 are both turned off only for a period of time corresponding to the pulse-width time Tp2 only once in the control cycle Ts as shown in FIG. 4. Thus, the electromagnet current iL during this period decreases toward a current value iLmin (not shown) that can be regenerated from the negative electrode 171b to the positive electrode 171a through the diodes 165 and 166.

And in any case, after elapse of the pulse width time Tp1, Tp2, either one of the transistors 161 and 162 is turned on. Thus, the flywheel current is held in the amplification circuit 150 during this period.

In the turbo-molecular pump 100 having the basic constitution as above, an upper side (a side of the inlet port 101) in FIG. 1 is an inlet portion connected to a side of the target device, while a lower side (a side where an exhaust port 15 constituting the outlet port 133 is provided on the base portion 129 so as to protrude to a right side in the figure) is an outlet portion connected to an auxiliary pump (back pump) and the like, not shown. And the turbo-molecular pump 100 can be used, not only in a perpendicular attitude in a vertical direction as shown in FIG. 1, but also in an inverted attitude, in a horizontal attitude or even in an inclined attitude.

Moreover, in the turbo-molecular pump 100, the aforementioned outer cylinder 127 and the base portion 129 are combined so as to constitute one case (hereinafter, the both are referred together as a "main-body casing" or the like in some cases). Moreover, the turbo-molecular pump 100 is connected to a box-shaped electric component case (not shown) electrically (and structurally), and the aforementioned control device 200 is incorporated in the electric component case.

A constitution inside the main-body casing (combination of the outer cylinder 127 and the base portion 129) of the turbo-molecular pump 100 can be divided into a rotation mechanism portion which rotates the rotor shaft 113 and the like by the motor 121 and an exhaust mechanism portion rotated/driven by the rotation mechanism portion. Moreover, the exhaust mechanism portion can be divided into a turbo-molecular pump mechanism portion constituted by the rotor blade 102, the stator blade 123 and the like and a thread-groove pump mechanism portion (Holweck-type exhaust mechanism portion 204) constituted by the rotating-body lower cylinder portion 103b, the threaded spacer 131 and the like.

Moreover, the aforementioned purge gas (protective gas) is used for protection for the bearing portion, the rotor blade 102 and the like and performs prevention of erosion caused by the exhaust gas (process gas), cooling of the rotor blade 102 and the like. Supply of this purge gas can be made in an ordinary way.

For example, a purge-gas port 13 extending linearly in a radial direction is provided at a predetermined part of the base portion 129 (a position separated approximately by 180 degrees with respect to the outlet port 133 or the like). And to this purge-gas port 13, the purge gas is supplied from outside the base portion 129 through a purge-gas bomb (N2 gas bomb or the like), a flow regulator (valve device) and the like.

The aforementioned protective bearing 120 is also called a "touchdown (T/D) bearing", a "backup bearing" and the like. By means of these protective bearing 120, even in a case of a trouble in an electric system or a trouble such as an atmospheric entry, for example, the position or an attitude of the rotor shaft 113 is not largely changed, and the rotor blade 102 and a peripheral part thereof are not damaged.

Note that, in each of the figures (FIG. 1, FIGS. 5 to 11, FIGS. 13 to 15) illustrating structures of the turbo-molecular pump 100 and the rotating body 103, description of hatching indicating a section of a component is omitted in order to avoid cumbersomeness of the figures.

Manufacture of Rotating Body 103

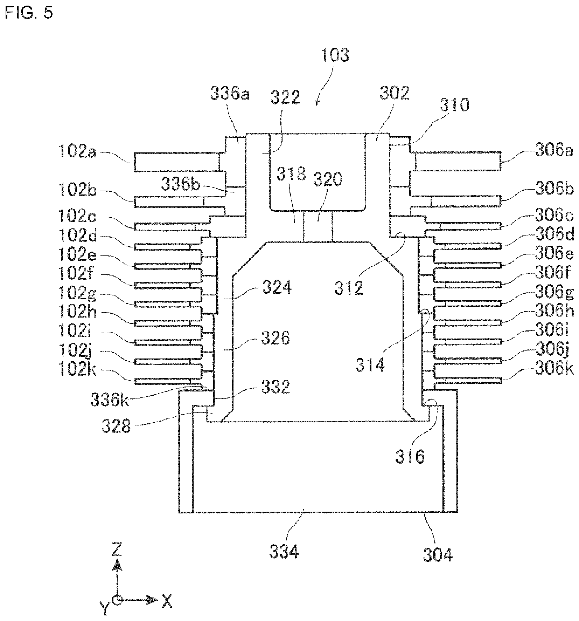

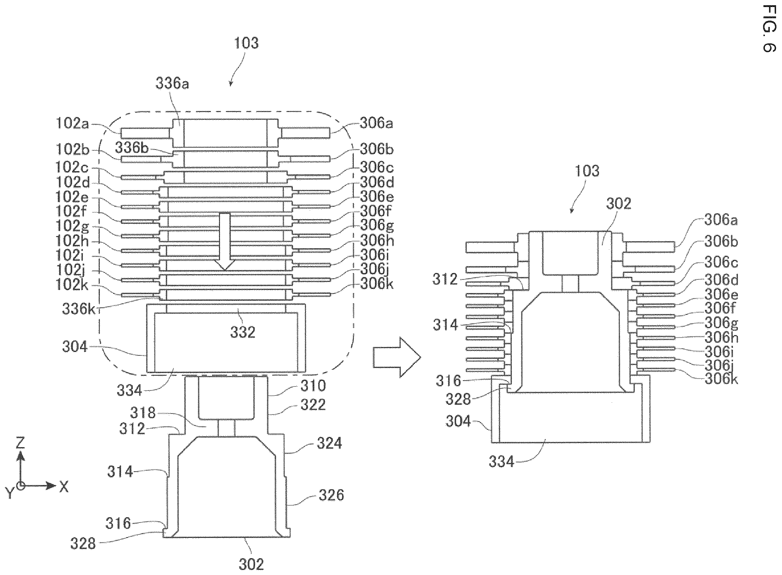

FIG. 5 and FIG. 6 schematically illustrate the structures of components of the rotating body 103 used in the turbo-molecular pump 100 as described above. In this embodiment, the rotating body 103 has a structure in which a second component formed by solidifying a powder is caused to cover a periphery of a first component disposed inside.

The rotating body 103 includes, as shown in FIG. 5 and FIG. 6, an inner-side cylinder portion 302, an outer-side cylinder portion 304, and blade ring portions 306a to 306k in multiple stages (11 stages, here). The inner-side cylinder portion 302 is classified as the first component, while the outer-side cylinder portion 304 and the blade ring portions 306a to 306k are classified as the second components.

The first component (the inner-side cylinder portion 302, here) is disposed relatively inside, while the second component (the outer-side cylinder portion 304 and the blade ring portions 306a to 306k, here) are disposed on an outer side of the first component. The second component is contracted (reduced) and connected to the first component during manufacture of the rotating body 103. Manufacturing methods of the first component and the second component and a manufacturing method of the rotating body 103 will be described later.

On left-end parts in FIG. 5 and FIG. 6, orthogonal coordinates by XYZ axes are illustrated. In the orthogonal coordinates, the X axis and the Y axis extend in a horizontal direction, while the Z axis extends in a vertical direction and is orthogonal to the X axis and the Y axis. A direction of an arrow in the arrow of each axis indicates a positive direction (positive direction). A circle in the coordinates indicates a direction from a depth on the paper toward a front, and a mark with a cross added to a circle indicates a direction from the front on the paper toward the depth.

Inner-Side Cylinder Portion 302

The outer-side cylinder portion 304 illustrated in right and left figures in FIG. 6 is classified as the first component and constitutes the rotating-body main body 103a (FIG. 1). As illustrated in the figure on the left side in FIG. 6, the inner-side cylinder portion 302 is formed cylindrically with steps. An outer diameter of the inner-side cylinder portion 302 is larger as it goes toward one end portion in an axial direction (lower end portion in FIG. 6) and smaller in stages as it goes toward the other end portion (upper end portion in FIG. 6). On an outer peripheral surface 310 of the inner-side cylinder portion 302, a first step portion 312, a second step portion 314, and a third step portion 316 are formed in order from the upper end side toward the lower end side.

Sizes of the first step portion 312, the second step portion 314, and the third step portion 316 are different from one another. The sizes of these step portions 312, 314, 316 can be expressed by protruding amounts (extended amounts) in the radial direction of the rotating body 103. The first step portion 312 is the largest, and the third step portion 316 is larger than the second step portion 314. Protruding directions of the first step portion 312, the second step portion 314, and the third step portion 316 are directions extending in an XY plane in the orthogonal coordinates.

The inner-side cylinder portion 302 has both ends in a vertical direction (Z-axis direction) open and has a disc portion 318 at a part in the middle of an axis direction. At a center of the disc portion 318, a through hole 320 is provided. Into this through hole 320, an upper end portion of the rotor shaft 113 (FIG. 1) is inserted from below after completion of the rotating body 103.

The disc portion 318 is disposed at a position substantially similar to that of the first step portion 312 with respect to an axis of the inner-side cylinder portion 302. The second step portion 314 is disposed at a position approximately at a middle between the disc portion 318 and the lower end portion of the inner-side cylinder portion 302. The third step portion 316 is disposed on the lower end portion of the inner-side cylinder portion 302.

Hereinafter, in the inner-side cylinder portion 302, a part on the upper end side than the first step portion 312 is referred to as a first cylinder portion 322, and a part between the first step portion 312 and the second step portion 314 as a second cylinder portion 324. Moreover, a part between the second step portion 314 and the third step portion 316 is referred to as a third cylinder portion 326. On a lower end portion of the third cylinder portion 326, a flange portion 328 extending in the radial direction over the entire circumference is formed.

Outer-Side Cylinder Portion 304

The outer-side cylinder portion 304 is formed cylindrically with upper and lower end portions (both end portions in the axis direction) open. The outer-side cylinder portion 304 is classified as the second component and constitutes the aforementioned rotating-body lower cylinder portion 103b. On an upper part in the outer-side cylinder portion 304, a true-circular upper opening 332 is formed, and on a lower part, too, a similar true-circular lower opening 334 is formed. A diameter (inner diameter) of the upper opening 332 is smaller than the diameter (inner diameter) of the lower opening 334.

The outer-side cylinder portion 304 is concentrically combined with the inner-side cylinder portion 302 and is caused to cover the inner-side cylinder portion 302. At this time, the inner-side cylinder portion 302 enters into the outer-side cylinder portion 304 through the lower opening 334 of the outer-side cylinder portion 304, and as shown in the right figure in FIG. 6, protrudes upward from the upper opening 332 of the outer-side cylinder portion 304. A peripheral edge portion of the upper opening 332 in the outer-side cylinder portion 304 is placed on the flange portion 328 of the inner-side cylinder portion 302, and the flange portion 328 is locked with the peripheral edge portion of the upper opening 332 in the outer-side cylinder portion 304 from below.

The outer-side cylinder portion 304 constitutes the rotating-body lower cylinder portion 103b (FIG. 1) of the Holweck-type exhaust mechanism portion 204. As shown in FIG. 1, in the Holweck-type exhaust mechanism portion 204, the rotating-body lower cylinder portion 103b is opposed to the threaded spacer 131 having the rotating-body lower cylinder portion 103b and the thread groove 131a.

The rotating-body lower cylinder portion 103b is relatively rotated/displaced with respect to the threaded spacer 131 on the outer side of the thread groove 131a. The rotating-body lower cylinder portion 103b functions as a kind of a blade. And by means of the rotation of the rotating-body lower cylinder portion 103b, a flow of the exhaust gas along the thread groove 131a is generated, and directivity is given to the exhaust gas.

The turbo-molecular pump including the Holweck-type exhaust mechanism portion 204 as above is considered such that the second component (the outer-side cylinder portion 304, here) includes a rotor blade for Holweck pump mechanism constituted by a cylinder portion disposed on an outer peripheral surface (constituting the outer peripheral surface).

Blade Ring Portions 306a To 306k

The blade ring portions 306a to 306k are components having the rotor blades 102 (102a, 102b, 102c, ...). In the blade ring portions 306a to 306k, a large number of rotor blades 102a to 102k are provided at predetermined angular intervals (10-degree intervals, for example) so as to protrude in the radial direction on an outer peripheral portion of each of cylindrical rotor-blade spacer portions 336a to 336k. A shape, a direction and the like of the rotor blades 102a to 102k provided in predetermined number each on each of the blade ring portions 306a to 306k can be similar to those of an ordinary type.

In the blade ring portions 306a to 306k, lengths and inner diameters in the axis direction (Z-axis direction) of the rotor-blade spacer portions 336a to 336k are not uniform, but each is set to an optimal value according to a function and disposition.

The blade ring portions 306a to 306k are components having rotor blades for turbo-molecular pump mechanism (rotor blades 102) constituted by of blade rows disposed radially. Each of the blade ring portions 306a to 306k can be classified as the rotor blade for turbo-molecular pump mechanism. Moreover, the blade ring portions 306a to 306k as a whole can be classified as the rotor blade for turbo-molecular pump mechanism. Furthermore, the outer-side cylinder portion 304 used integrally with the blade ring portions 306a to 306k can be included and altogether classified as the rotor blade for turbo-molecular pump mechanism.

The blade ring portions 306a to 306k are concentrically combined with the inner-side cylinder portion 302 as shown in the left figure in FIG. 6 and are caused to cover it from an outer side. At this time, the inner-side cylinder portion 302 enters into the rotor-blade spacer portions 336a to 336k from below, and the blade ring portions 306a to 306k are stacked concentrically in the axis direction (Z-axis direction). In the example in FIG. 6, the blade ring portions 306a to 306c from the uppermost stage to the third stage are caused to cover the first cylinder portion 322 in the inner-side cylinder portion 302.

The blade ring portion 306c on the third stage from above is placed on the first step portion 312 in the inner-side cylinder portion 302 and is supported by the first step portion 312. The blade ring portion 306b on the second stage is placed on the blade ring portion 306c on the third stage and is supported by the blade ring portion 306c on the third stage. The blade ring portion 306a on the first stage is placed on the blade ring portion 306b on the second stage and is supported by the blade ring portion 306b on the second stage.

Similarly, the blade ring portions 306d to 306g on the fourth to seventh stages are caused to cover the second cylinder portion 324 in the inner-side cylinder portion 302. The blade ring portion 306g on the seventh stage is placed on the second step portion 314 in the inner-side cylinder portion 302. The stacked blade ring portions 306d to 306f on the fourth to sixth stages are supported by the blade ring portion 306g on the seventh stage.

The blade ring portions 306h to 306k on the eighth to eleventh stages are caused to cover the third cylinder portion 326 in the inner-side cylinder portion 302. The blade ring portion 306k on the eleventh stage is placed on the peripheral edge portion of the upper opening 332 in the outer-side cylinder portion 304. The stacked blade ring portions 306h to 306j on the eighth to tenth stages are supported by the blade ring portion 306k on the eleventh stage.

Manufacturing Method of First Component

As described above, the inner-side cylinder portion 302 is classified as the first component, while the outer-side cylinder portion 304 and the blade ring portions 306a to 306k are classified as the second components. In this embodiment, the second component is contracted and joined to the first component during manufacture of the rotating body 103.

In the examples in FIG. 5 and FIG. 6, the inner-side cylinder portion 302, which is the first component, is formed by shaving out a material of solid metal blank (solid columnar material or the like). The inner-side cylinder portion 302 is machined equally to a dimension of each part in the rotating body 103 which is a completed product during the shaving-out. The inner-side cylinder portion 302 is sintered together with the second component (the outer-side cylinder portion 304 and the blade ring portions 306a to 306k, here) as will be described later, but contraction is not caused by the sintering processing. Even if the contraction is caused, the contraction is drastically smaller than that of the second component.

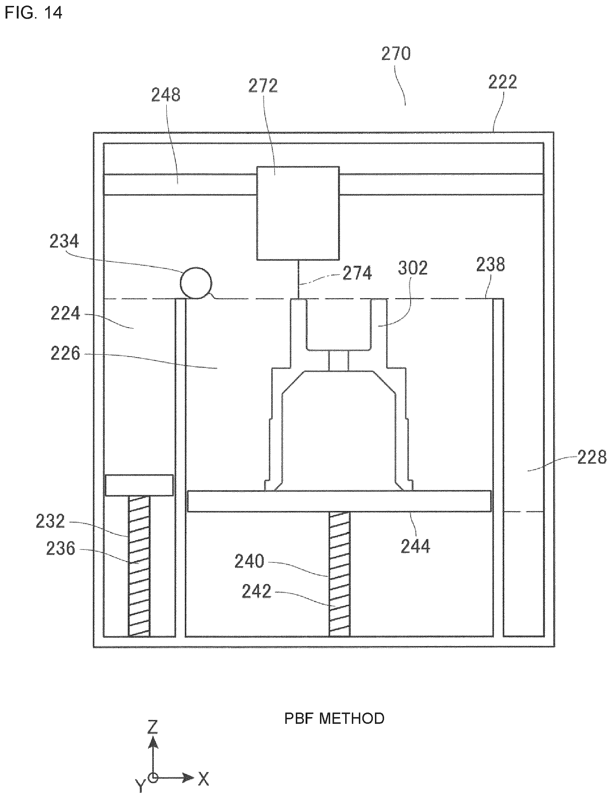

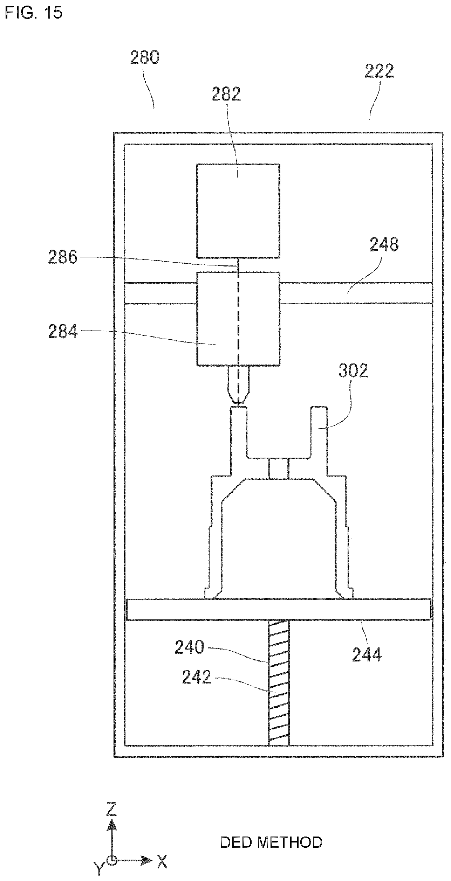

More strictly speaking, when the inner-side cylinder portion 302 is shaved out of the solid metal blank, a dimension is basically unchanged even after being sintered, but if residual stress remains before the sintering, there is a possibility of slight contraction. Moreover, as in a second embodiment (FIG. 14 and FIG. 15) which will be described later, when the first component (the inner-side cylinder portion 302, here) is manufactured by a BJ method or an FDM method and sintered before the second component (the outer-side cylinder portion 304 and the blade ring portions 306a to 306k, here) is assembled, too, there is a possibility that the first component (the inner-side cylinder portion 302, here) is slightly contracted.

The material of which the inner-side cylinder portion 302 is shaved out can be any one of an extruded material manufactured by extrusion, a cast material manufactured by casting, and a forged material manufactured by forging, for example. That is, the inner-side cylinder portion 302 can be any one of the extruded material, the cast material, and the forged material.

Moreover, the inner-side cylinder portion 302 can be constituted by a single component or a plurality of components. Thus, the inner-side cylinder portion 302 can be formed of at least any one of the extruded material, the cast material, and the forged material. Moreover, the inner-side cylinder portion 302 can be constituted by combining these materials.

The inner-side cylinder portion 302, which is the first component, can be also manufactured by other manufacturing methods. For example, the inner-side cylinder portion 302 can be manufactured by laminate shaping using a 3D printer. The method of manufacturing the inner-side cylinder portion 302 by the 3D printer will be described later as another embodiment (FIG. 14 and FIG. 15). Moreover, the inner-side cylinder portion 302 can be manufactured by powder metallurgy and sintered in advance. In this case, too, no contraction is caused when being sintered together with the second component (the outer-side cylinder portion 304 and the blade ring portions 306a to 306k, here).

Manufacturing Method of Second Component

The outer-side cylinder portion 304 and the blade ring portions 306a to 306k, which are the second components, are formed of a green pellet. The green pellet is constituted by a metal powder (powders of an aluminum alloy, a stainless steel and the like) pressurized and solidified by press-molding. The manufacture of the outer-side cylinder portion 304 and the blade ring portions 306a to 306k can be also performed by the laminate shaping using the 3D printer (3D shaping device).

As methods of the laminate shaping by the 3D printer, a PBF (Powder Bed Fusion) method, the BJ (Binder Jetting) method, a DED (Directed Energy Deposition) method, the FDM (Fused Deposition Modeling) method and the like are known, for example.

Among them, the PBF method and the DED method are classified as methods not requiring the sintering processing after lamination, while the BJ method and the FDM method are classified as methods requiring the sintering processing after lamination. The manufacture of the outer-side cylinder portion 304 and the blade ring portions 306a to 306k can be performed by the stereoscopic shaping device using the method requiring the sintering processing such as the BJ method or the FDM method. By performing the manufacture of the outer-side cylinder portion 304 and the blade ring portions 306a to 306k by the laminate shaping using the 3D printer, wasting of the materials can be prevented as compared with a case where the shaving-out is employed. Outlines of the BJ method and the FDM method will be described below.

BJ Method

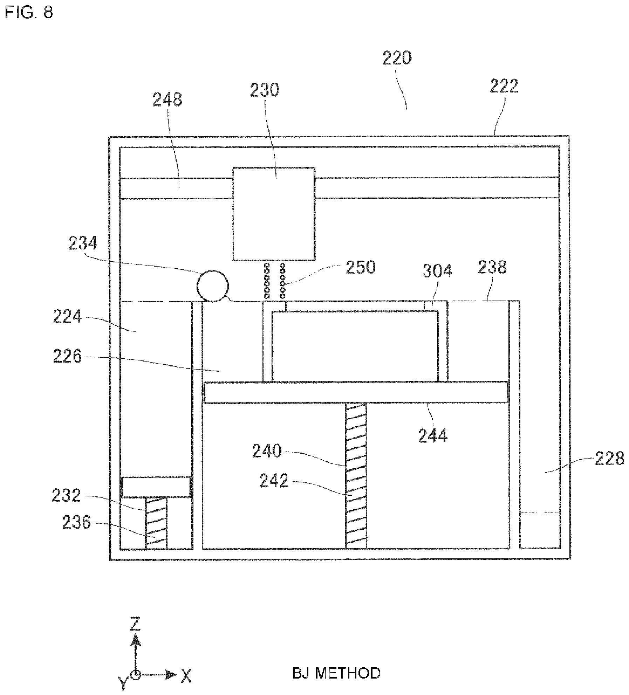

In the BJ method (FIG. 8), a head portion 230 selectively injects a liquid binding agent (Binder) 250 from an inkjet nozzle (not shown) and solidifies layers of a material powder 238 one by one. In the BJ method shown in FIG. 8, a material supply portion 224, a laminating portion 226, an excess-material receiving portion 228, and the head portion 230 are provided in a housing 222 of a stereoscopic shaping device 220. The material supply portion 224, the laminating portion 226, and the excess-material receiving portion 228 are aligned in one direction (left to right in FIG. 8, the X-axis direction).

The material supply portion 224 includes a supply elevator 232 and a roller (also called a "recoater") 234. The supply elevator 232 moves upward (a positive direction of the Z axis in an XYZ coordinates in FIG. 8) by using a threaded portion 236 and pushes up the whole material powder 238. A movement amount (rising amount) of the supply elevator 232 is approximately several tens microns per session of movement, for example. The roller 234 rotates, scrapes up the pushed-up material powder 238 and moves it toward the laminating portion 226.

The laminating portion 226 includes a laminating elevator 240. The laminating portion 226 displaces a laminating table 244 of the laminating elevator 240 downward (a negative direction of the Z axis) by a predetermined amount per session of lamination by using a threaded portion 242. The displacement amount per session of the laminating table 244 corresponds to a shaping thickness (lamination thickness) in one session of the lamination. To a space generated each time the laminating table 244 is lowered, the material powder 238 is supplied by the roller 234, and the material powder 238 is laid.

The head portion 230 moves at a high speed and is positioned by a positioning mechanism portion 248. Though not shown, the positioning mechanism portion 248 includes displacement mechanisms in the X-axis direction and the Y-axis direction. The positioning mechanism portion 248 may include a displacement mechanism of the Z axis.

The head portion 230 selectively injects the binding agent 250 from the inkjet nozzle while moving on the basis of data on each layer of an object to be shaped (the outer-side cylinder portion 304, here) as a shaping target. When formation of one layer is completed, the laminating table 244 is lowered by one stage, and the roller 234 lays the new material powder 238. On the newly laid layer of the material powder 238, the binding agent 250 is injected in conformity with a sectional shape of the outer-side cylinder portion 304. Until the shaping of the outer-side cylinder portion 304 is completed, laying of the material powder 238 and formation of each layer are repeated.

After the completion of the shaping, the object to be shaped is taken out and assembled as shown in the left figure in FIG. 6 and then, sintering of the shaped object as shown in the right figure in FIG. 6 is performed. The sintering is performed in order to improve mechanical characteristics of the material powder 238 bound by the binding agent 250. By applying a heat in a high-temperature furnace, the binding material in the object to be shaped is burned out, the shaped object is somewhat contracted, and required mechanical characteristics are obtained.

FDM Method

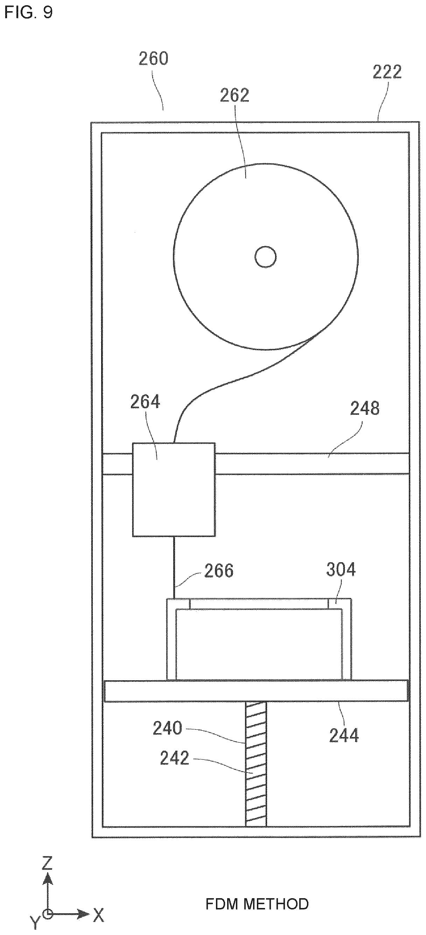

In the FDM method in the example in FIG. 9, a stereoscopic shaping device 260 includes a filament supply portion 262 and a head portion 264. Hereinafter, portions similar to those in the BJ method (FIG. 8) are given the same signs, and explanation is omitted as appropriate.

The head portion 264 is mounted on the positioning mechanism portion 248 and moves in accordance with a sectional shape of the object to be shaped (the outer-side cylinder portion 304, here). The stereoscopic shaping device 260 by the FDM method (FIG. 9) leads out a filament 266 containing the binding agent from the filament supply portion 262. The stereoscopic shaping device 260 pushes out the filament 266 from the head portion 264 while fusing it by a heat of a heat source and performs stereoscopic shaping by laminating each layer on the laminating table 244.

Binding of Second Component and First Component in a State Supported by Supporting Tool 400

After the outer-side cylinder portion 304 and the blade ring portions 306a to 306k (second component) are formed by the green pellet, these components are assembled to the inner-side cylinder portion 302 (first component) as shown in the left figure in FIG. 6. The outer-side cylinder portion 304 and the blade ring portions 306a to 306k are caused to concentrically cover the inner-side cylinder portion 302. After this, the inner-side cylinder portion 302 and the outer-side cylinder portion 304 and the blade ring portions 306a to 306k caused to cover the inner-side cylinder portion 302 are subjected to the sintering processing altogether.

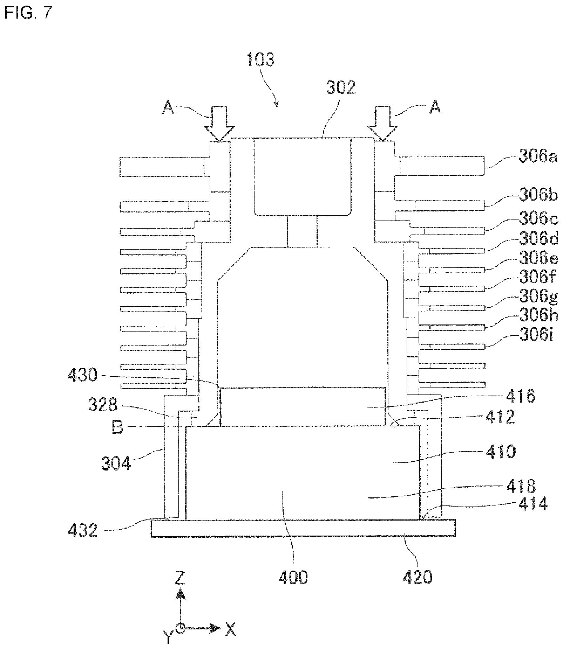

When the inner-side cylinder portion 302, the outer-side cylinder portion 304, and the blade ring portions 306a to 306k are assembled, a supporting tool 400 as shown in FIG. 7 is used. The supporting tool 400 is formed having a stepped columnar shape.

Note that FIG. 7 illustrates a state of the outer-side cylinder portion 304, and the blade ring portions 306a to 306k after the sintering processing (after contraction). The supporting tool 400 is used also during the sintering processing, but contraction as in the outer-side cylinder portion 304 is not caused, and dimensions before and after the sintering processing is hardly changed. Here, regardless of before or after the sintering processing, the supporting tool 400 will be described by applying FIG. 7.

An outer diameter of the supporting tool 400 is larger on a one-end portion in the axis direction (lower end portion in FIG. 7) and becomes smaller in steps as it goes toward the other-end portion (upper end portion in FIG. 7). On an outer peripheral surface 410 of the supporting tool 400, a first step portion 412 and a second step portion 414 are formed in order from an upper end side toward a lower end side. In the example in FIG. 7, sizes of the first step portion 412 and the second step portion 414 are equal to each other.

An upper end portion of the supporting tool 400 is a first columnar portion 416 having a relatively smaller diameter, and a portion on a lower side of the first columnar portion 416 is a second columnar portion 418 having a diameter larger than that of the first columnar portion 416. On a lower end portion of the second columnar portion 418, a flange portion 420 extends in the radial direction over the entire circumference.

When the inner-side cylinder portion 302 is to be covered with the outer-side cylinder portion 304, first, the inner-side cylinder portion 302 is caused to cover the first columnar portion 416 in the supporting tool 400 from above. The flange portion 328 of the inner-side cylinder portion 302 is caused to cover the first step portion 412 in the supporting tool 400 and is placed on the second columnar portion 418. The flange portion 328 of the inner-side cylinder portion 302 contacts the second columnar portion 418 from above.

An inner diameter of the third cylinder portion 326 in the inner-side cylinder portion 302 is formed somewhat larger than the diameter of the first columnar portion 416 in the supporting tool 400. Thus, a clearance 430 is generated between the third cylinder portion 326 in the inner-side cylinder portion 302 and the first columnar portion 416 in the supporting tool 400.

The peripheral edge portion of the upper opening 332 in the outer-side cylinder portion 304 contacts the flange portion 328 in the inner-side cylinder portion 302 from above. Thus, a position of the outer-side cylinder portion 304 in the axis direction (Z-axis direction) is regulated by the flange portion 328 of the inner-side cylinder portion 302.

In a sintering process in which the sintering processing is executed, the outer-side cylinder portion 304 and the blade ring portions 306a to 306k contract by approximately 20% in a state supported by the supporting tool 400. The inner-side cylinder portion 302 is formed by the method of shaving-out and the like so that it does not contract during the sintering processing. Thus, the outer-side cylinder portion 304 and the blade ring portions 306a to 306k caused to cover the inner-side cylinder portion 302 are contracted and brought into close contact with the inner-side cylinder portion 302.

In the sintering processing, the clearance between the inner-side cylinder portion 302 and the outer-side cylinder portion 304 as well as the blade ring portions 306a to 306k disappears. By heating in the sintering processing, the inner-side cylinder portion 302, the outer-side cylinder portion 304, and the blade ring portions 306a to 306k are fused and joined.

A size of the clearance between the inner-side cylinder portion 302 and the outer-side cylinder portion 304 as well as the blade ring portions 306a to 306k before the sintering is determined so that the clearance from the inner-side cylinder portion 302 disappears, and joining between the components is generated by contraction of the outer-side cylinder portion 304 and the blade ring portions 306a to 306k. Thus, even if the rotating body 103 is cut off in a vertical direction after the sintering, for example, the outer-side cylinder portion 304 and the blade ring portions 306a to 306k are not separated from the inner-side cylinder portion 302. Since contact surfaces of the outer-side cylinder portion 304 and the inner-side cylinder portion 302 are fused, there are such effects that expansion of the outer-side cylinder portion 304 in the radial direction by a centrifugal force during the rotation is suppressed, and a stress generated in the outer-side cylinder portion 304 is alleviated.

The rotating body 103 manufactured as above can be considered to be such that the inner-side cylinder portion 302 and the outer-side cylinder portion 304 as well as the blade ring portions 306a to 306k are clearance fit before the sintering processing and are interference fit after the sintering processing. And according to the manufacturing method as above, after an outer-side component is caused to cover an inner-side component, there is no need to perform a work of press-fit, shrink-fit, welding, brazing or the like. Therefore, a work to assemble the outer-side cylinder portion 304 as well as the blade ring portions 306a to 306k to the inner-side cylinder portion 302 is easy and moreover, damage on a material of the component is small.

Note that the aforementioned sintering processing is not limited to completion in one session but may be performed in plural times, for example (twice or three times).

Setting of Component Dimension Considering Sintering

The outer-side cylinder portion 304 and the blade ring portions 306a to 306k which are components obtained by solidifying the metal powder contract by approximately 20% in the sintering process. Moreover, components located relatively on the outer side in the radial direction with the axis of the rotating body 103 as a reference are susceptible to a centrifugal force largely as compared with components located on the inner side, and deformation can occur easily during rotation. Thus, measures can be taken for the component which contracted by sintering so that loosening by the centrifugal force during the rotation does not occur.

As one of the measures, component dimensions before the sintering can be set so that a clearance (reference dimension of the clearance) between a component on an inner side (shaft side) and a component on an outer side (hole side) satisfies the following relationship;

$$\text{Reference dimension of clearance} = a - (c-b) - (d+e)/2$$

Where each sign means as follows:

a: Diameter change amount [mm] by contraction at sintering
b: Diameter change amount [mm] by centrifugal force of inner-side (axis side) component
c: Diameter change amount [mm] by centrifugal force of outer-side (hole side) component
d: Tolerance width [mm] of inner-side (axis side) component
e: Tolerance width [mm] of outer-side (hole-side) component

For example, if the diameter (outer diameter) of the inner-side component (the inner-side cylinder portion 302, here) is $\Phi 100 \pm 0.05$ mm, a is as follows. Moreover, in this case, parameters b to e are set as follows:

a: 100 mm x 0.2 = 20 mm
b: 0.1 mm
c: 0.2 mm
d: Tolerance width of inner-side component 0.1 mm ($\pm 0.05$ mm)
e: Tolerance width of outer-side component 0.2 mm ($\pm 0.1$ mm)

Under this condition, the reference dimension of the clearance is 20 - (0.2 - 0.1) - (0.1 + 0.2)/2 = 18.75 mm, which is smaller than a diameter change amount (20 mm) by contraction during sintering.

And the inner diameter of the outer-side component (the blade ring portions 306a to 306k, for example) is set to 118.75 $\pm$ 0.1 mm, and each component is designed by using this value as a reference.

As a result, a clearance of a size close to 10 mm (18.75/2 = 9.375 mm) can be ensured on one side in relation to the radial direction. Thus, without performing strict positioning or the like, components can be caused to cover or stacked. Thus, the assembling work of the components can be performed easily, and workability is improved.

Moreover, when the component on the outer side is contracted during the sintering process, an engagement relationship between the component on the inner side and the component on the outer side gradually changes from the clearance fit to the interference fit, and centering (aligning) is performed automatically. Therefore, strict centering is not needed at the assembling work, whereby the assembling work is made easy. Moreover, since the outer-side cylinder portion 304 and the blade ring portions 306a to 306k, which are the second components, are formed by the laminate shaping, generation of chips can be prevented, and wasting of the materials and labor for recycling in relation with wastes can be reduced as compared with formation by shaving-out.

Devisal During Sintering Process

Use of Supporting Tool 400

In the sintering process, contraction of approximately 20% is generated in the second component, and it is effective to devise measures assuming the contraction in advance. For example, by using the supporting tool 400 as shown in FIG. 7, even if the outer-side cylinder portion 304 and the blade ring portions 306a to 306 are contracted during the sintering process, a locked state of the inner-side cylinder portion 302, the outer-side cylinder portion 304, and the blade ring portions 306a to 306 can be ensured, and separation of these components from one another can be prevented.

Application of Pressing Force

Moreover, when the outer-side cylinder portion 304 and the blade ring portions 306a to 306k are to be assembled to the inner-side cylinder portion 302, as indicated by an arrow A in FIG. 7, a pressing force is applied from above. As a result, the blade ring portions 306a to 306c on the first to third stages are pressed onto the first step portion 312 of the inner-side cylinder portion 302, and loosening of the blade ring portions 306a to 306c with respect to the inner-side cylinder portion 302 is prevented.

In this case, by suitably ensuring the dimensions of the blade ring portions 306d to 306g on the fourth to seventh stages and by setting a height (position in the Z-axis direction) of the blade ring portion 306d on the fourth stage to be flush with the first step portion 312, the pressing force (arrow A) can be transmitted to the blade ring portions 306d to 306g on the fourth to seventh stages. As a result, the blade ring portions 306d to 306g on the fourth to seventh stages are pressed onto the second step portion 314 of the inner-side cylinder portion 302, and loosening of the blade ring portions 306d to 306g with respect to the inner-side cylinder portion 302 is prevented.

Moreover, by suitably ensuring the dimensions of the blade ring portions 306h to 306k on the eighth to eleventh stages and the outer-side cylinder portion 304 and by setting a height (position in the Z-axis direction) of the blade ring portion 306h on the eighth stage to be flush with the second step portion 314, the pressing force (arrow A) can be transmitted to the blade ring portions 306h to 306k on the eighth to eleventh stages and the outer-side cylinder portion 304. As a result, the blade ring portions 306h to 306k on the eighth to eleventh stages and the outer-side cylinder portion 304 are pressed onto the third step portion 316 of the inner-side cylinder portion 302, and loosening of the blade ring portions 306h to 306k and the outer-side cylinder portion 304 with respect to the inner-side cylinder portion 302 is prevented.

Here, FIG. 7 illustrates the state of the outer-side cylinder portion 304 and the blade ring portions 306a to 306k after the contraction as described above. After the contraction, the outer-side cylinder portion 304 and the blade ring portions 306a to 306k are joined to the inner-side cylinder portion 302, and a clearance 432 is generated between the lower end portion of the outer-side cylinder portion 304 and the flange portion 420 of the supporting tool 400.

That is, since the inner-side cylinder portion 302 is placed on the second columnar portion 418 in the supporting tool 400, a contact portion between the flange portion 328 of the inner-side cylinder portion 302 and the first step portion 412 in the supporting tool 400 becomes a reference position B, and the contact is maintained even after the contraction. And with the entire contraction in the rotating body 103, the lower end portion of the outer-side cylinder portion 304 gets closer to the reference position B, and the clearance 432 from the flange portion 420 of the supporting tool 400 is generated.

As described above, by providing the first step portion 312 to the third step portion 316 on the inner-side cylinder portion 302 and by sintering the outer-side cylinder portion 304 and the blade ring portions 306a to 306k while supporting them in the vertical direction (Z-axis direction, axis direction), the first step portion 312 to the third step portion 316 become positioning spots, respectively. And by means of the first step portion 312 to the third step portion 316, an influence of a shift by the contraction in the vertical direction can be suppressed as much as possible.

More specifically, a contraction rate during sintering is changed by a filling rate of a metal powder (a rate of containing the metal powder). And if the outer-side cylinder portion 304 and the blade ring portions 306a to 306k are simply stacked, a shift amount related to the blade ring portion 306a on the first stage located on the uppermost stage becomes the largest, and the shift amount cannot be ignored in some cases.

However, as in the example in FIG. 7, by positioning the first step portion 312 to the third step portion 316 at the respective positions, a maximum value of the shift amount can be suppressed. That is, the shifts of the blade ring portion 306c on the third stage and the blade ring portion 306g on the seventh stage, and the outer-side cylinder portion 304 are prevented, which are the components on the lowest stage of each of a group of a plurality of components, and an accumulated value of the shift amounts is suppressed. As a result, even the blade ring portion 306a on the first stage, for example, has a value of the shift amount suppressed, and the shift amount can be contained to an allowable level easily.

Here, in the example in FIG. 7, a clearance can be generated between the blade ring portion 306c on the third stage and the blade ring portion 306d on the fourth stage or between the blade ring portion 306g on the seventh stage and the blade ring portion 306h on the eighth stage by contraction, but a force of pressing downward may be generated by interposing an elastic body (spring element) such as a spring washer or the like in a part of the clearance.

Note that, in the example in FIG. 7, the pressing force indicated by the arrow A is applied at two spots, but the pressing force may be applied annularly over the entire circumference of the rotor-blade spacer portion 336a in the blade ring portion 306a on the first stage, for example. Moreover, the pressing force may be applied in an arc state and partially (or intermittently) to the rotor-blade spacer portion 336a. Furthermore, the application of the pressing force can be performed through various elastic bodies (spring elements) such as a spring washer, a coil spring, a plate spring and the like, for example.


Other Application Targets of Second Component

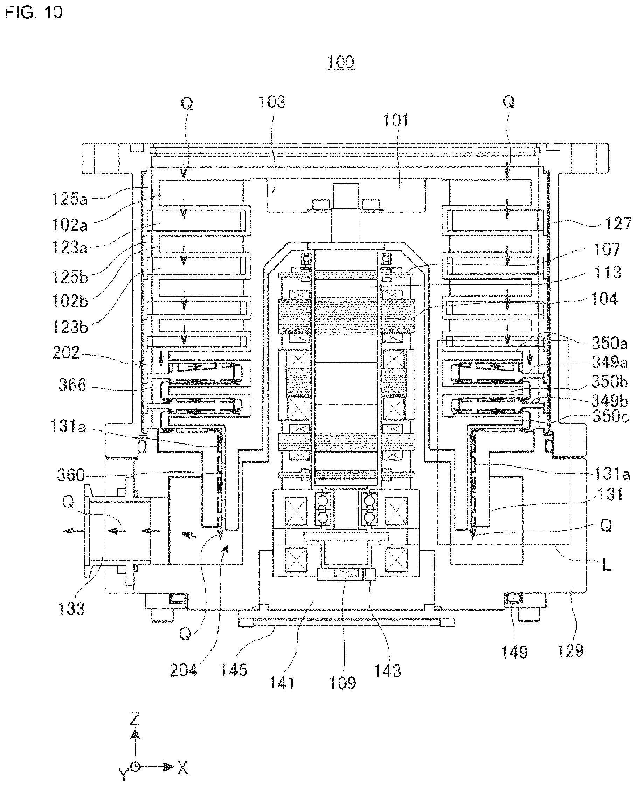

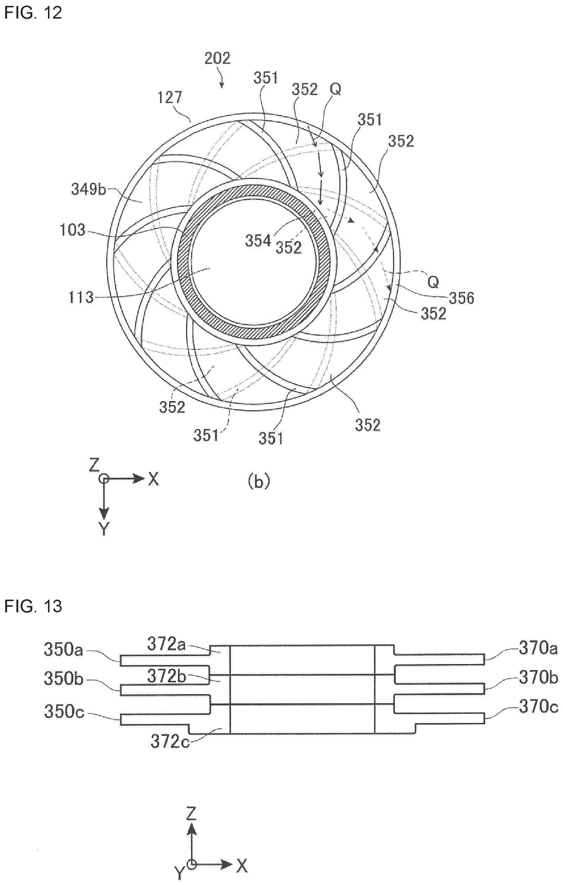

Components that can be the second components are not limited to the rotor blade for turbo-molecular pump mechanism or the rotor blade for Holweck-type pump mechanism (the outer-side cylinder portion 304 constituting the rotating-body lower cylinder portion 103b (FIG. 1)) as described above. For example, as shown in FIG. 10, the turbo-molecular pump 100 includes a Siegbahn-type exhaust mechanism portion 202 in some cases. The rotor blade for Siegbahn-type pump mechanism (rotor-disc ring portions 370a to 370c shown in FIG. 13) constituting the Siegbahn-type exhaust mechanism portion 202 can also be the second component.

As shown in FIG. 10, the Siegbahn-type exhaust mechanism portion 202 is included in combination with the Holweck-type exhaust mechanism portion 204 in some cases. Moreover, though not shown, the Siegbahn-type exhaust mechanism portion 202 is provided singularly without accompanying the Holweck-type exhaust mechanism portion 204 in some cases. By including the Siegbahn-type exhaust mechanism portion 202, the directionality is given to the exhausted gas, and exhaust performances of the turbo-molecular pump 100 is improved.

FIG. 10 illustrates an example of a structure in which the turbo-molecular pump 100 includes both the Siegbahn-type exhaust mechanism portion 202 and the Holweck-type exhaust mechanism portion 204. Hereinafter, the structure of the Siegbahn-type exhaust mechanism portion 202 and a relationship between the Siegbahn-type exhaust mechanism portion 202 and the Holweck-type exhaust mechanism portion 204 will be described, but portions similar to those in the turbo-molecular pump 100 shown in FIG. 1 are given the same signs and the explanation thereof is omitted as appropriate.

The Siegbahn-type exhaust mechanism portion 202 is formed so as to spatially continue to a subsequent stage of (on a downstream side immediately after) the turbo-molecular pump mechanism portion constituted by the aforementioned rotor blades 102 (102a, 102b, 102c, ... each having a blade row) and the stator blades 123 (123a, 123b, 123c, ...) and the like. On the other hand, the Holweck-type exhaust mechanism portion 204 is formed so as to spatially continue to a subsequent stage of (on the downstream side immediately after) the Siegbahn-type exhaust mechanism portion 202.

The Siegbahn-type exhaust mechanism portion 202 is a Siegbahn-type exhaust mechanism and has stator discs 349a and 349b and rotor discs 350a to 350c. The rotor-disc ring portions 370a to 370c (FIG. 13, which will be described later) on which the rotor discs 350a to 350c are provided function as a rotor blade for Siegbahn-type pump mechanism constituted by disc portions disposed on an outer peripheral surface.

The rotor discs 350a to 350c are disposed continuing to a lower stage of the rotor blade 102 and are aligned in the axis direction. The rotor discs 350a to 350c are formed integrally with the rotating body 103 and are rotated in the same direction as those of the rotor shaft 113 and the rotating body 103 with the rotation of the rotating body 103. That is, the rotor discs 350a to 350c are rotated integrally also with the rotor blades 102 (102a, 102b, 102c ...).

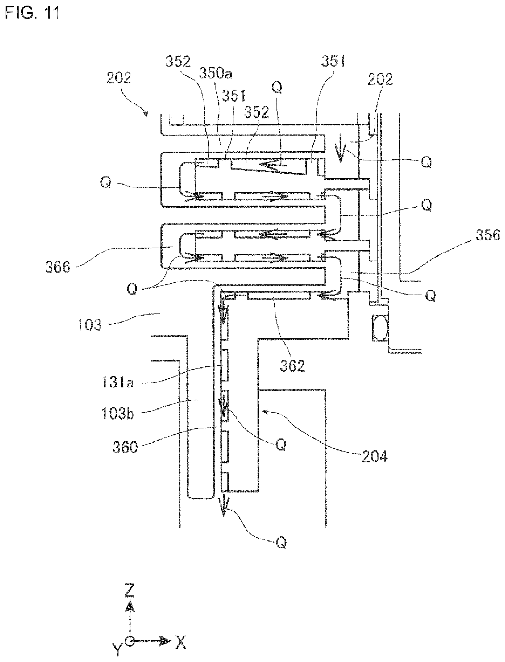

Between the stator discs 349a and 349b and the rotor discs 350a to 350c, as shown in FIG. 11 in an enlarged manner, a large number of ridge portions 351 each having a rectangular sectional shape are formed so as to protrude. Moreover, between the adjacent ridge portions 351, as shown in FIG. 11, a Siegbahn spiral groove portion 352, which is a spiral groove channel, is formed.

FIG. 11 illustrates, in an enlarged manner, a groove exhaust mechanism portion in a portion on the right side (in a two-dot chain line frame L) of the rotor shaft 113 shown in FIG. 10. Note that the groove exhaust mechanism portion has a structure of line symmetry (symmetry in FIG. 10) with the axes of the main-body casing (combination of the outer cylinder 127 and the base portion 129), the rotor shaft 113 and the like as a center and thus, only the portion on the right side in FIG. 10 is illustrated in the enlarged manner, here, while a portion on the left side is not shown.

In the Siegbahn-type exhaust mechanism portion 202 with the structure as above, when the motor 121 is driven, the rotor discs 350a to 350c are rotated. And relative rotational displacement is performed between each of the stator discs 349a and 349b and each of the rotor discs 350a to 350c. Moreover, as shown by a large number of arrows Q (only some of them are given signs) in FIGS. 10 to 12, the gas transferred by the turbo-molecular pump mechanism portion (constituted by the rotor blade 102, the stator blade 123 and the like) reaches the Siegbahn-type exhaust mechanism portion 202 of the groove exhaust mechanism portion.

The gas which has reached the Siegbahn-type exhaust mechanism portion 202 flows into the Siegbahn spiral groove portion 352 on the uppermost stream and passes through a channel which is gradually narrowed in a depth direction (axial direction of the rotor shaft 113). After that, the gas goes to a centripetal direction (axis direction) or a centrifugal direction via turnback portions 354 and 356 and the Siegbahn spiral groove portion 352 at a certain depth and flows into the Holweck-type exhaust mechanism portion 204 which will be described later.

In the Siegbahn-type exhaust mechanism portion 202 as above, the rotor discs 350a to 350c are disposed in line in the axial direction with respect to the rotor blade 102. Therefore, a structure to be assembled to the inner-side cylinder portion 302 can be realized similarly to the blade ring portions 306a to 306k (FIG. 6).

For example, as shown in FIG. 13, the rotor-disc ring portions 370a to 370c are formed separately of a green pellet made by solidifying and coagulating a metal powder. The rotor-disc ring portions 370a to 370c have rotor-disc spacer portions 372a to 372c similar to the rotor-blade spacer portions 336a to 336k (FIG. 6) of the blade ring portions 306a to 306k. In the rotor-disc ring portions 370a to 370c, the rotor discs 350a to 350c protrude from the rotor disc spacer portions 372a to 372c in a flange state in the radial direction.

Manufacture of the rotor-disc ring portions 370a to 370c can be performed by the laminate shaping using the 3D printer. As a method of the laminate shaping by the 3D printer, similarly to the blade ring portions 306a to 306k, the BJ method or the FDM method or the like requiring the sintering processing is employed, for example. And the rotor-disc ring portions 370a to 370c are supposed to be formed by the stereoscopic shaping devices 220 and 260 using the BJ method or the FDM method.

When the rotor-disc ring portions 370a to 370c are to be assembled, the rotor-disc ring portions 370a to 370c are caused to cover the inner-side cylinder portion 302 in order from the outer side in the clearance fit state. The rotor-disc ring portions 370a to 370c are subjected to the sintering processing together with the inner-side cylinder portion 302, the outer-side cylinder portion 304, and the blade ring portions 306a to 306k and integrated with the inner-side cylinder portion 302. A clearance between inner peripheral portions of the rotor-disc ring portions 370a to 370c and the inner-side cylinder portion 302 before the sintering processing can be set similarly to that of the blade ring portions 306a to 306k.

By employing the structure or the manufacturing method as described above, a component having the rotor discs 350a to 350c (the rotor-disc ring portions 370a to 370c functioning as the rotor blades for Siegbahn-type pump mechanism, here) can be formed not by shaving-out. And generation of chips can be prevented, and wasting of the materials and labor for recycling in relation with wastes can be reduced as compared with formation by shaving-out.

Moreover, the rotor blade for Siegbahn-type pump mechanism (the rotor-disc ring portions 370a to 370c, here) can be easily assembled to the inner-side cylinder portion 302 and moreover, damage on a material of the component is small. And strict centering is not needed at the assembling work, whereby the assembling work is also made easy.

When the Holweck-type exhaust mechanism portion 204 is provided on the subsequent stage of the Siegbahn-type exhaust mechanism portion 202 as above as in the examples in FIGS. 10 to 12, a Holweck-type exhaust channel 360 (FIG. 11) receives the gas having passed through a Siegbahn-type exhaust channel 366. And the Holweck-type exhaust channel 360 leads it from the outer peripheral side to the inner peripheral side by the Holweck-type spiral groove portion 362 which receives it and introduces it to the thread groove 131a via the turnback portion. Moreover, in the thread groove 131a, the introduced gas is led to the downstream side along the thread groove 131a with the rotation of the rotating body 103.

Note that, the Holweck-type exhaust mechanism portion 204 in the examples in FIGS. 10 to 12 is configured to perform transfer of the gas to the radial direction with the axis of the rotor shaft 113 as the reference and the transfer of the gas to the axis direction of the rotor shaft 113. However, a portion which performs transfer of the gas to the radial direction can be classified so as to be included in the Siegbahn-type exhaust mechanism portion 202, and only a portion which performs the transfer of the gas to the axis direction of the rotor shaft 113 can be classified as the Holweck-type exhaust mechanism portion 204.

Second Embodiment According to Manufacturing Method of First Component

In the manufacturing method of the first component according to the first embodiment, the inner-side cylinder portion 302, which is the first component, was formed by shaving out the material of solid metal blank (columnar material or the like). In this second embodiment, the inner-side cylinder portion 302 is manufactured by laminate shaping using the 3D printer.

For the manufacture of the inner-side cylinder portion 302, the PBF method or the DED method can be used. The PBF method and the DED method are classified as methods not requiring the sintering processing after lamination. By manufacturing the inner-side cylinder portion 302 by the laminate shaping using the 3D printer (stereoscopic shaping device), wasting of the material can be prevented as compared with the case where the shaving-out is employed. Hereinafter, an outline of the PBF method or the DED method will be described. Note that the portions similar to those in the BJ method shown in FIG. 8 and in the FDM method shown in FIG. 9 are given the same signs, and explanation is omitted as appropriate.

PBF Method

In the PBF method (FIG. 14), the material powder 238 laid flat is laminated while being fused and fixed for each layer by a heat source (a laser, an electronic beam or the like) output from the head portion 272. In the stereoscopic shaping device 270 shown in FIG. 14, the laser is used as the heat source. The head portion 272 emits a laser beam 274 from a laser light source via an incorporated optical system (not shown).

In the example in FIG. 14, irradiation of the laser beam 274 (laser irradiation) is performed with a predetermined beam diameter toward the material powder 238 immediately below (negative direction of the Z axis). By means of the irradiation of the laser beam 274, the material powder 238 is fused and solidified. An irradiation shape of the laser beam 274 (a shape of a movement locus of the laser beam 274) is determined on the basis of data of each layer obtained by slicing 3D model data of the inner-side cylinder portion 302. When the laser irradiation for one layer is completed, the laser irradiation for the subsequent layer is performed, and the supply of the material powder 238 and the laser irradiation are repeated.

During the shaping, an inactive gas such as argon (Ar), for example, may be filled in a region where the shaping is performed (shaping region) so as to lower oxygen concentration and to prevent oxidization of the material powder 238. A plurality of the head portions 272 may be mounted in order to improve productivity.

DED Method

In the DED method (FIG. 15), the metal powder (material powder) or metal of a filament is fused and build-up welded by a directional energy beam such as a laser, an electronic beam, a plasma arc and the like. Hereinafter, portions similar to those in the various methods described above are given the same signs, and explanation is omitted as appropriate.

In the DED method in the example of FIG. 15, a stereoscopic shaping device 280 includes a filament supply portion 282 and a head portion 284. The head portion 284 is mounted on the positioning mechanism portion 248 and moves in accordance with a profile shape of an object to be shaped (the inner-side cylinder portion 302, here). To a distal end portion of the filament 286 led out of the filament supply portion 282, the head portion 284 emits the laser beam (not shown). By means of the head portion 284, the filament 286 is fused and coagulated, and each layer of the inner-side cylinder portion 302 is laminated.

Note that the inner-side cylinder portion 302 may be the first component by being sintered after being formed by the stereoscopic shaping device using the BJ method or the FDM method. In this case, not only the second component (the outer-side cylinder portion 304 and the blade ring portions 306a to 306k, here) but also the first component (the inner-side cylinder portion 302, here) can be manufactured by the 3D printer which executes the BJ method or the FDM method, and the 3D printer of the other methods (the PBF method, the DED method or the like) does not have to be used when manufacturing the first component.

Inventions That can be Extracted from Each Embodiment

As described above, a vacuum pump (the turbo-molecular pump 100 and the like) according to this application has the following characteristics.

(1) A vacuum pump according to this application is characterized by in that,

in the vacuum pump including a vacuum vessel (a main-body casing constituted by combining the outer cylinder 127 and the base portion 129 and the like); and
a rotating body (the rotating body 103 and the like) installed rotatably in the vacuum vessel,
the rotating body has a structure in which a second component formed by solidifying a powder (the outer-side cylinder portion 304, the blade ring portions 306a to 306k, and the rotor discs 350a to 350c and the like) is caused to cover a periphery of a first component (the inner-side cylinder portion 302 and the like) disposed on an inner side.

(2) One embodiment of the vacuum pump according to the above (1) is characterized in that
the first component is formed of at least any one of an extruded material, a cast material, and a forged material.
(3) One embodiment of the vacuum pump according to the above (1) is characterized in that
the first component is formed by a stereoscopic shaping device using the PBF method or the DED method.
(4) One embodiment of the vacuum pump according to the above (1) is characterized in that
the first component is sintered after being formed by the stereoscopic shaping device using the BJ method or the FDM method.
(5) One embodiment of the vacuum pump according to any one of the above (1) to (4) is characterized in that
the second component is formed of a green pellet.
(6) One embodiment of the vacuum pump according to any one of the above (1) to (4) is characterized in that
the second component is formed by the stereoscopic shaping device using the BJ method or the FDM method.
(7) One embodiment of the vacuum pump according to any one of the above (1) to (6) is characterized in that
the first component and the second component caused to cover the first component are both subjected to sintering processing.
(8) One embodiment of the vacuum pump according to the above (7) is characterized in that
the first component and the second component are clearance fit before the sintering processing and is interference fit after the sintering processing.
(9) One embodiment of the vacuum pump according to any one of the above (1) to (8) is characterized in that
the second component includes a rotor blade for turbo-molecular pump mechanism (the rotor blade 102 and the like) constituted by a blade row disposed radially.
(10) One embodiment of the vacuum pump according to any one of the above (1) to (9) is characterized in that
the second component includes a rotor blade for Siegbahn-type pump mechanism (the outer-side cylinder portion 304 and the like) constituted by a disc portion disposed on an outer peripheral surface.
(11) One embodiment of the vacuum pump according to any one of the above (1) to (10) is characterized in that
the second component includes a rotor blade for Holweck-type pump mechanism (the rotor discs 350a to 350c and the like) constituted by a cylinder portion disposed on the outer peripheral surface.
(12) A rotating body for vacuum pump according to this application is characterized by having a structure that,

in the rotating body for vacuum pump (the rotating body 103 and the like) installed rotatably in a vacuum vessel of the vacuum pump,
a second component formed by solidifying a powder (the outer-side cylinder portion 304, the blade ring portions 306a to 306k, the rotor discs 350a to 350c and the like) is caused to cover a periphery of a first component (the inner-side cylinder portion 302 and the like) disposed on an inner side.

(13) One embodiment of the rotating body for vacuum pump according to the above (12) is characterized in that
the first component and the second component caused to cover the first component are subjected to sintering processing altogether.
(14) A manufacturing method of a vacuum pump according to this application is characterized in that,

in the manufacturing method of a vacuum pump including a vacuum vessel (a main-body casing constituted by combining the outer cylinder 127 and the base portion 129 and the like); and
a rotating body (the rotating body 103 and the like) installed rotatably in the vacuum vessel,
the rotating body includes:

a first process in which a second component (the outer-side cylinder portion 304, the blade ring portions 306a to 306k, and the rotor discs 350a to 350c and the like) formed by solidifying a powder is caused to cover a periphery of a first component (the inner-side cylinder portion 302 and the like) disposed on an inner side; and a second process in which the first component and the second component are subjected to sintering processing altogether.

(15) One embodiment of the rotating body for vacuum pump according to the above (14), characterized in that the first component and the second component are clearance fit before the sintering processing and are interference fit after the sintering processing.

Note that the present invention is not limited to each of the aforementioned embodiments but is capable of various modifications or combination of each of the embodiments within a range not departing from the gist thereof.

REFERENCE SIGNS LIST

100 Turbo-molecular pump
102 (102a, 102b, 102c...) Rotor blade
103 Rotating body
113 Rotor shaft
121 Motor
131 Threaded spacer
131a Thread groove
202 Siegbahn-type exhaust mechanism portion
204 Holweck-type exhaust mechanism portion
220, 260, 270, 280 Stereoscopic shaping device
302 Inner-side cylinder portion
304 Outer-side cylinder portion
306a to 306k Blade ring portion
312 First step portion
314 Second step portion
316 Third step portion
322 First cylinder portion
324 Second cylinder portion
326 Third cylinder portion
328 Flange portion
332 Upper opening
334 Lower opening
336a to 3 3 6k Rotor-blade spacer portion
349a, 349b Stator disc
350a to 350c Rotor disc
370a to 370c Rotor-disc ring portion
400 Supporting tool

**Claims**

1. A vacuum pump comprising:

   a vacuum vessel; and
   a rotating body installed rotatably in the vacuum vessel, wherein
   the rotating body has a structure in which a second component is caused to cover a periphery of a first component disposed on an inner side.

2. The vacuum pump according to claim 1, wherein
   the first component is formed of at least any one of an extruded material, a cast material, and a forged material.

3.  The vacuum pump according to claim 1, wherein
    the first component is formed by a stereoscopic shaping device using a PBF method or a DED method.

4.  The vacuum pump according to claim 1, wherein
    the first component is sintered after being formed by the stereoscopic shaping device using a BJ method or an FDM method.

5.  The vacuum pump according to any one of claims 1 to 4, wherein
    the second component is formed of a green pellet.

6.  The vacuum pump according to any one of claims 1 to 4, wherein
    the second component is formed by the stereoscopic shaping device using the BJ method or the FDM method.

7.  The vacuum pump according to any one of claims 1 to 6, wherein
    the first component and the second component caused to cover the first component are both subjected to sintering processing.

8.  The vacuum pump according to claim 7, wherein
    the first component and the second component are clearance fit before the sintering processing and is interference fit after the sintering processing.

9.  The vacuum pump according to any one of claims 1 to 8, wherein
    the second component includes a rotor blade for turbo-molecular pump mechanism constituted by a blade row disposed radially.

10. The vacuum pump according to any one of claims 1 to 9, wherein
    the second component includes a rotor blade for Siegbahn-type pump mechanism constituted by a disc portion disposed on an outer peripheral surface.

11. The vacuum pump according to any one of claims 1 to 10, wherein
    the second component includes a rotor blade for Holweck-type pump mechanism constituted by a cylinder portion disposed on the outer peripheral surface.

12. A rotating body for vacuum pump installed rotatably in a vacuum vessel of a vacuum pump, **characterized by** having a structure in which a second component formed by solidifying a powder is caused to cover a periphery of a first component disposed on an inner side.

13. The rotating body for vacuum pump according to claim 12 wherein
    the first component and the second component caused to cover the first component are subjected to sintering processing altogether.

14. A manufacturing method of a vacuum pump including;

    a vacuum vessel; and
    a rotating body installed rotatably in the vacuum vessel, wherein
    the rotating body includes:

    a first process in which a second component formed by solidifying a powder is caused to cover a periphery of a first component disposed on an inner side; and
    a second process in which the first component and the second component are subjected to sintering processing altogether.

15. The manufacturing method of a vacuum pump according to claim 14, wherein
    the first component and the second component are clearance fit before the sintering processing and are interference fit after the sintering processing.

FIG. 1

FIG. 2

FIG. 3

《 IN CASE OF INCREASE.》
《 IN CURREN

CONTROL CYCLE

ELECTROMAGNET CURRENT i L

TRANSISTOR 161 ON/OFF

TRANSISTOR 162 ON/OFF

Tp1

0          T s

EP 4 464 899 A1

FIG. 4

《 IN CASE OF DECREASE. 》
《 IN CURRENT 》

CONTROL CYCLE

ELECTROMAGNET CURRENT  i L

TRANSISTOR 161
ON
OFF

TRANSISTOR 162
ON
OFF

Tp2

O

T s

23

FIG. 5

FIG. 6

FIG. 7

FIG. 8

BJ METHOD

FIG. 9

FDM METHOD

FIG. 10

FIG. 11

FIG. 12

FIG. 13

FIG. 14

PBF METHOD

FIG. 15

DED METHOD

## INTERNATIONAL SEARCH REPORT

International application No.

**PCT/JP2023/000442**

### A. CLASSIFICATION OF SUBJECT MATTER

*F04D 19/04*(2006.01)i; *B22F 7/08*(2006.01)i; *B22F 10/14*(2021.01)i; *B22F 10/18*(2021.01)i; *B22F 10/25*(2021.01)i; *B22F 10/28*(2021.01)i; *B33Y 10/00*(2015.01)i; *B33Y 80/00*(2015.01)i
FI:   F04D19/04 F; F04D19/04 D; B22F10/18; B22F10/14; B22F10/28; B22F10/25; B22F7/08 E; B33Y10/00; B33Y80/00

According to International Patent Classification (IPC) or to both national classification and IPC

### B. FIELDS SEARCHED

Minimum documentation searched (classification system followed by classification symbols)

F04D19/04; B22F7/08; B22F10/14; B22F10/18; B22F10/25; B22F10/28; B33Y10/00; B33Y80/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-205391 A (PFEIFFER VACUUM GMBH) 08 December 2016 (2016-12-08) paragraphs [0029]-[0053], fig. 1-3 | 1, 3-4, 6-7, 9, 10-14 |
| Y | | 2, 5 |
| A | | 8, 15 |
| Y | JP 2004-263687 A (VARIAN S. P. A.) 24 September 2004 (2004-09-24) paragraphs [0003], [0011] | 2 |
| Y | JP 2007-71139 A (OSAKA VACUUM LTD.) 22 March 2007 (2007-03-22) paragraphs [0017]-[0022] | 2 |
| Y | JP 62-203721 A (INOUE JAPAX RESEARCH INC.) 08 September 1987 (1987-09-08) p. 4, upper left column, lines 1, 2 | 5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2016-205391 | A | 08 December 2016 | EP | 3085964 | A1 | |
| | | | | CN | 106064291 | A | |
| JP | 2004-263687 | A | 24 September 2004 | US | 2004/0175261 | A1 | |
| | | | | paragraphs [0003], [0019] | | | |
| | | | | EP | 1402975 | A1 | |
| JP | 2007-71139 | A | 22 March 2007 | (Family: none) | | | |
| JP | 62-203721 | A | 08 September 1987 | (Family: none) | | | |

Form PCT/ISA/210 (patent family annex) (January 2015)

## REFERENCES CITED IN THE DESCRIPTION

**Patent documents cited in the description**

- JP 6284519 B